**Europäisches Patentamt**

**European Patent Office**

**Office européen des brevets**

(19)

(11) Veröffentlichungsnummer: **0 298 018 B1**

# EUROPÄISCHE PATENTSCHRIFT

(12)

(45) Veröffentlichungstag der Patentschrift:
25.09.91 Patentblatt 91/39

(51) Int. Cl.$^5$: **H02H 3/10, H01H 83/22**

(21) Anmeldenummer: **88730137.2**

(22) Anmeldetag: **14.06.88**

(54) Überstromauslösevorrichtung mit voreilender Auslösung.

(30) Priorität: **29.06.87 DE 3721848**

(43) Veröffentlichungstag der Anmeldung:
**04.01.89 Patentblatt 89/01**

(45) Bekanntmachung des Hinweises auf die
Patenterteilung:
**25.09.91 Patentblatt 91/39**

(84) Benannte Vertragsstaaten:
**DE FR IT**

(56) Entgegenhaltungen:
**EP-A- 0 153 535**
**DE-C- 674 539**
**FR-A- 1 223 313**
**GB-A- 234 153**
**GB-A- 380 580**
**GB-A- 391 225**

(73) Patentinhaber: **Siemens Aktiengesellschaft**
**Wittelsbacherplatz 2**
**W-8000 München 2 (DE)**

(72) Erfinder: **Pfeiffer, Bernhard, Dr.**
**Wittelsbacher Strasse 28**
**W-1000 Berlin 49 (DE)**

## Beschreibung

Die Erfindung betrifft eine Überstromauslösevorrichtung mit zeitverzögerter voreilender Auslösung bei ungleicher Belastung der Phasen eines mehrphasigen Stromkreises, insbesondere für den Motorschutz, wobei jeder Phase ein transformatorisches Stromerfassungsglied zugeordnet und diese Stromerfassungsglieder miteinander und mit einem elektromechanischen Wandler in Reihe geschaltet sind. Eine Überstromauslösevorrichtung dieser Art ist beispielsweise durch die DE-C-674539 bekannt geworden. Die voreilende Auslösung wird dadurch bewirkt, daß bei ungleicher Belastung der Phasen ein Differenzstrom auftritt, der einem Auslöseglied zugeführt wird. Bei gleicher Belastung der Phasen tritt dagegen kein Differenzstrom auf. Zur Erfassung der Phasenströme dient ein Summenstromwandler, auf dessen Kern von den Phasenströmen durchflossene Wicklungen sowie in Reihe geschaltete Sekundärwicklungen angeordnet sind. Eine solche Anordnung stellt einen verhältnismäßig großen Aufwand dar.

Der Erfindung liegt in diesem Zusammenhang die Aufgabe zugrunde, den Aufbau einer voreilend wirkenden Überstromauslösevorrichtung zu vereinfachen und dadurch die Anwendung der voreilenden Charakteristik auch bei kleinen Schaltgeräten mit geringem verfügbaren Einbauraum für die Auslöser zu gestatten.

Gemäß der Erfindung wird diese Aufgabe dadurch gelöst, daß als Stromerfassungsglied eine das Magnetjoch eines elektromagnetischen Auslösers jeder Phase umschließende Wicklung und als elektromechanischer Wandler eine temperatur-zeitabhängige Anordnung zur Abgabe eines zeitvergrößerten Auslösesignals dient. Damit entfällt ein gesonderter Summenstromwandler. Die benötigten Wicklungen sind praktisch ohne zusätzlichen Raumbedarf in dem Schaltgerät unterzubringen, da sie nur eine oder wenige Wicklungen aufzuweisen brauchen. Durch die Auswertung des Differenzstromes in einer temperatur-zeitabhängigen Einrichtung wird vermieden, daß jede Unsymmetrie sofort zur Auslösung und damit zu einer Betriebsunterbrechung führt. Erst das Vorhandensein einer Unsymmetrie über einen gewissen Zeitraum führt zur Auslösung. Beispielsweise kann hierzu der elektromechanische Wandler einen Ruhekontakt für die Erregerwicklung des Magnetantriebes eines Schützes enthalten. Ein Arbeitskontakt wäre beispielsweise geeignet, den Hilfsauslöser eines Schutzschalters zu betätigen. Für den normalen Überlastschutz sind gewöhnliche, ohne Voreilung arbeitende und daher einfach aufgebaute thermische Auslöser oder Relais verwendbar. Im Bedarfsfall kann eine Überstromauslösevorrichtung nach der Erfindung hinzugefügt werden, die keinerlei mechanische Verbindung mit dem thermischen Auslöser benötigt und nicht einmal in deren Nähe angeordnet sein muß.

Hierdurch gelangt man zu einem übersichtlichen Aufbau, der das Raumangebot kompakter Schaltgeräte gut ausnutzt.

Für die Bereitstellung des Auslösesignals wird nur eine sehr geringe Hilfsenergie benötigt. Daher werden an die Stromerfassungsglieder keine großen Anforderungen gestellt. Als temperatur-zeitabhängige Anordnung ist beispielsweise ein Bimetallelement geeignet, wie man es auch für die normalen Überstromauslöser einsetzt. Geeignet sind ferner beheizbare Elemente aus einer Formgedächtnislegierung. Sowohl Bimetallelemente als Elemente aus einer Formgedächtnislegierung können in direkt oder indirekt beheizter Anordnung vorgesehen sein.

In die Reihenschaltung aus Stromerfassungsgliedern und elektromechanischem Wandler kann ein Schalter eingefügt sein. Dieser gestattet es in Abhängigkeit von seiner Stellung, ein Schaltgerät wahlweise mit oder ohne voreilende Auslösung zu betreiben.

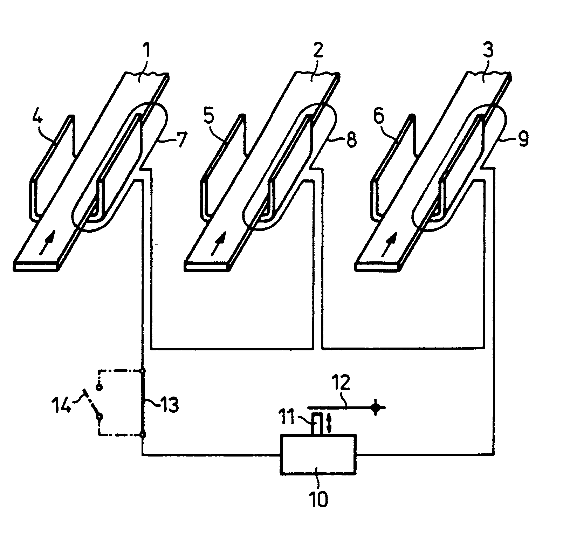

Die Erfindung wird im folgenden anhand des in der Figur dargestellten Ausführungsbeispieles näher erläutert.

In der Figur sind die Phasenleiter eines Motorschaltgerätes mit 1, 2 und 3 bezeichnet. Jeder dieser Leiter ist von einem U-förmigen Magnetjoch 4, 5 und 6 umgeben, das Bestandteil eines elektromagnetischen Schnellauslösers ist. Der zugehörige Anker und die weiteren Auslöseteile sind zur Vereinfachung fortgelassen. Ihre Gestaltung ist in zahlreichen Beispielen allgemein bekannt, so daß von einer näheren Erläuterung abgesehen werden kann. Lediglich als Beispiel sei auf die DE-B-2810987 hingewiesen, in der ein elektromagnetischer Schnellauslöser für einen Leistungsschalter kompakter Bauart (MCCB) beschrieben ist.

Wesentlich für die elektromagnetischen Schnellauslöser der erwähnten und für die Zwecke der Erfindung eingesetzten Art ist die Verwendung der durchgehenden Phasenleiter 1, 2 und 3 als einzige Erregerwicklung jedes der Magnetjoche 4, 5 und 6. Die Magnetjoche selbst sind infolgedessen bei der normalen Ausführung frei von einer Bewicklung.

Für die Zwecke der Erfindung wird nun auf jedem der Magnetjoche 4, 5 und 6 eine einzelne Windung oder wenige Windungen 7, 8 bzw. 9 angeordnet. Der Raumbedarf dieser Wicklungen ist derart gering, daß die Magnetjoche gegenüber der üblichen Ausführung nicht vergrößert zu werden brauchen. Hierdurch wird jedes der Magnetjoche als Eisenkern eines Transformators oder Wandlers benutzt, dessen Primärwicklung der zugehörige Leiter 1, 2 bzw. 3 ist. Diese Anordnung ist ständig wirksam und unabhängig von der absoluten Höhe des Stromes und insbesondere unabhängig von einer solchen Höhe des Stromes, wie sie zum Anziehen des zugehörigen (jedoch in der Figur nicht gezeigten) Ankers erforderlich ist.

Die drei Sekundärwicklungen sind miteinander sowie mit einem elektromechanischen Wandler 10 in Reihe geschaltet. Der elektromechanische Wandler 10 wird somit nur dann von Strom durchflossen, wenn eine ungleichmäßige Belastung vorliegt und somit im Unterschied zum ungestörten Zustand ein Differenzstrom auftritt. Dieser durchfließt den elektromechanischen Wandler 10, der beispielsweise ein Bimetallglied enthalten kann. Entsprechend der Charakteristik dieses Bimetallgliedes erfolgt nach einer gewissen Zeit eine Verschiebung eines Stößels 11, die entweder zur Betätigung eines Schaltkontaktes oder eines mechanischen Auslöseelementes 12 herangezogen werden kann.

In Abhängigkeit von der Höhe des Nennstromes des Schaltgerätes kann es zweckmäßig sein, anstelle einer einzigen Windung 7, 8 und 9 mehrere Windungen vorzusehen.

Wie bei der Betrachtung der Figur zu erkennen ist, kann die beschriebene voreilend arbeitende Auslösevorrichtung unabhängig von den Leiterbahnen 1, 2 und 3 in einem Schaltgerät untergebracht werden, weil zunächst eine elektrische Hilfsgröße gewonnen wird. Diese Einrichtung ist daher als Zusatzbaustein für Schaltgeräte geeignet, die einen üblichen Überstromauslöser besitzen und mit Rücksicht auf den Motorschutz zusätzlich eine voreilende Chrakteristik erhalten sollen.

Dies führt zu der weiteren vorteilhaften Ausgestaltung, die strichpunktiert in der Figur eingezeichnet ist. Der dort anstelle einer Leiterbrücke 13 wahlweise verwendbare Schalter 14 gestattet es, den Sekundärstromkreis zu unterbrechen bzw. wirksam zu machen, um auf diese Weise ein Schaltgerät mit oder ohne voreilende Auslösung im Fall der Unsymmetrie zu betreiben.

## Patentansprüche

1. Überstromauslösevorrichtung mit zeitverzögerter, voreilender Auslösung bei ungleicher Belastung der Phasen (1, 2, 3) eines mehrphasigen Stromkreises, insbesondere für den Motorschutz, wobei jeder Phase (1, 2, 3) ein transformatorisches Stromerfassungsglied (4, 7 ; 5, 8 ; 6, 9) zugeordnet und diese Stromerfassungsglieder miteinander und mit einem elektromechanischen Wandler (10) in Reihe geschaltet sind, **dadurch gekennzeichnet,** daß als Stromerfassungsglied eine das Magnetjoch (4, 5, 6) eines elektromagnetischen Auslösers jeder Phase (1, 2, 3) umschließende Wicklung (7, 8, 9) und als elektromechanischer Wandler (10) eine temperatur-zeitabhängige Anordnung zur Abgabe eines zeitverzögerten Auslösesignals dient.

2. Überstromauslösevorrichtung nach Anspruch 1, **dadurch gekennzeichnet,** daß als elektromechanischer Wandler (10) ein beheizbares Teil aus einer Formgedächtnislegierung vorgesehen ist.

3. Überstromauslösevorrichtung nach Anspruch 1, **dadurch gekennzeichnet,** daß die Reihenschaltung der Stromerfassungsglieder (4, 7 ; 5, 8 ; 6, 9) und des elektromechanischen Wandlers (10) einen Schalter (14) enthält.

## Claims

1. An overcurrent releasing device with time-delay leading release of an unbalanced load of the phases (1, 2, 3) of a multi-phase electric circuit, in particular for motor protection, wherein each phase (1, 2, 3) is allocated a transformer current detecting element (4, 7 ; 5, 8 ; 6, 9) and these current detecting elements are connected in series with each other and with an electromechanical transformer (10), characterised in that serving as current detecting element there is a winding (7, 8, 9) enclosing the magnet yoke (4, 5, 6) of an electromagnetic release of each phase (1, 2, 3), and serving as electromechanical transformer (10) there is a temperature-time-dependent arrangement for issuing a time-delay release signal.

2. An overcurrent releasing device according to claim 1, characterised in that provided as electromechanical transformer (10) there is a heatable part of a shape-memory alloy.

3. An overcurrent releasing device according to claim 1, characterised in that the series connection of the current detecting elements (4, 7 ; 5, 8 ; 6, 9) and the electromechanical transformer (10) comprises a switch (14).

## Revendications

1. Déclencheur à surintensité à déclenchement retardé, avancé dans le cas d'une charge différente des phases (1, 2, 3) d'un circuit polyphasé, notamment pour la protection de moteurs, et dans lequel à chaque phase (1, 2, 3) est associé un circuit de détection de courant (4, 7 ; 5, 8 ; 6, 9) à transformateur, et les circuits de détection de courant sont branchés en série entre eux et avec un transducteur électromécanique (10), caractérisé par le fait qu'on utilise comme circuit de détection de courant un enroulement (7, 8, 9) entourant la culasse magnétique (4, 5, 6) d'un déclencheur électromagnétique de chaque phase (1, 2, 3), et comme transducteur électromagnétique (10), un dispositif dépendant du temps et de la température et servant à délivrer un signal de déclenchement retardé.

2. Déclencheur à surintensité suivant la revendication 1, caractérisé par le fait qu'il est prévu, comme transducteur électromagnétique (10), une partie pouvant être chauffée et réalisée en un alliage à mémoire de forme.

3. Déclencheur à surintensité suivant la revendication 1, caractérisé par le fait que le circuit série formé des circuits de détection de courant (4, 7 ; 5, 8; 6, 9) et du transducteur électromécanique (10) comporte un interrupteur (14).